# EUROPEAN PATENT SPECIFICATION

(11) **EP 0 396 775 B1**
(45) Date of publication and mention of the grant of the patent: **13.12.1995**
(21) Application number: 89911893.9
(22) Date of filing: 26.10.1989
(51) Int. Cl.: F16J 9/16, F16J 9/10, F25B 9/14

(54) **SEALING APPARATUS**
DICHTUNGSVORRICHTUNG
DISPOSITIF D'ETANCHEITE

(30) Priority: 31.10.1988 JP 273059/88; 24.10.1989 JP 276787/89
(43) Date of publication of application: 14.11.1990
(73) Proprietor: KABUSHIKI KAISHA TOSHIBA, Kawasaki-shi, Kanagawa-ken 210 (JP)
(72) Inventor: KURIYAMA, Toru Tennoucho, Danchi 3 tou 529, Kanagawa-ken 240 (JP); NAKAGOME, Hideki, Tokyo 168 (JP)
(74) Representative: Freed, Arthur Woolf
(86) International application number: JP8901102
(87) International publication number: WO9005256

(56) References cited:
- CH-A- 218 958
- JP-A- 5 149 355
- JP-A- 6 256 666
- JP-A-61 109 968
- JP-B- 4 937 774
- JP-U- 5 535 397

## Description

### Technical Field

The present invention relates to a sealing device for sealing a gap between a cylinder and a piston without using a lubricating oil.

### Background Art

Various types of devices are available as a sealing device for sealing a gap between a cylinder and a piston. Many of these sealing devices are of a type which lubricates a sliding portion with a lubricating oil. However, some systems requiring a cylinder and a piston are easily affect by a lubricating oil used in the sealing device. A typical example of such a system is a cryogenic refrigerator using helium gas as a refrigerant. If a lubricating oil is used in a sealing portion of a refrigerator of this type, its refrigerating efficiency is conspicuously reduced. Therefore, no lubricating oil can be used in this refrigerator. For this reason, in the cryogenic refrigerator, a gap between a cylinder and a piston is normally sealed by a sealing device of a non-lubricating type.

This non-lubricating type sealing device normally comprises a ring groove formed in the outer circumferential surface of a piston, a ring-like sealing member fitted in the ring groove so that its outer circumferential surface is brought into contact with the inner circumferential surface of a cylinder, and an expander ring with ends, fitted inside the sealing member, for pressing the sealing member against the inner surface of the cylinder. The sealing member consists of a resin-based material which exhibits low friction characteristics and low wearability even in a non-lubricating state. Each of the two end portions of the sealing member is formed to have a thickness in the radial direction 1/2 that of the other portion. The two end portions are overlapped in the radial direction so that the sealing member is fitted in the ring groove as a ring having a uniform thickness.

In the non-lubricating type sealing device having the above arrangement, however, a large amount of gas leaks from the overlapped portion of the two ends of the sealing member. In order to obtain good sealing characteristics, therefore, the two end portions of the sealing member must be brought into tight contact with each other in both the radial and circumferential directions as if an endless seal ring is formed by this sealing member. However, it is sometimes very difficult to form such a ring depending on the type of equipment requiring the sealing device. For example, the sealing device is normally assembled at room temperature in a cryogenic refrigerator described above. However, the sealing device is cooled to a temperature of several tens K upon operation, and the sealing member thermally shrinks at such a low temperature. Therefore, even if the two end portions of the sealing member are in tight contact with each other in both the radial and circumferential directions upon assembly, the contact state in especially the circumferential direction is degraded upon operation. When the contact state of the two end portions of the sealing member is degraded, sealing performance is reduced. That is, high sealing performance cannot be expected especially when a conventional nonlubricating type sealing device is used at a cryogenic temperature.

JP-A-61-109968 discloses a sealing device for sealing a gap between a cylinder and a piston having ring grooves formed in an outer surface of the piston. First and second ring-like sealing members are axially stacked in the ring groove. A third ring-like sealing member is fitted inside the first and second sealing members and an expander ring with ends is fitted inside the third sealing member. The expander ring presses the first and second sealing members against the inner circumferential surface of the cylinder via the third sealing member.

It is, therefore, an object of the present invention to provide a non-lubricating type sealing device which can exhibit high sealing performance without complicating its structure even when it is used at a cryogenic temperature.

### Disclosure of Invention

According to the present invention, there is provided a sealing device for sealing a gap between a cylinder and a piston without using a lubricating oil, comprising a ring groove formed in an outer circumferential surface of said piston, first and second ring-like sealing members consisting of a resin-based material and axially stacked in said ring groove, a third ring-like sealing member fitted inside said first and second sealing members, and an expander ring with ends, fitted inside said third sealing member, for pressing said first and second sealing members against an inner circumferential surface of said cylinder via said third sealing member; characterized in that: said expander ring is constituted by a coil spring with ends, and is fitted between an inner circumferential surface of said third sealing member and a bottom of said ring groove such that radial recovering forces of said expander ring are applied toward the inner circumferential surface of said cylinder.

In this sealing device, since the first, second and third sealing members are arranged as described above, the cuts of the sealing members can be separated by, e. g., 120° in the circumferential direction. When the cuts of the sealing members are separated in the circumferential direction in this manner, each cut is perfectly closed by the adjacent sealing member. In this sealing device, therefore, a structure in which as if one sealing member with no cut is assembled can be obtained. Even if the width of the cut of each sealing member changes due to heat shrinkage, no influence appears because the cut is perfectly closed by the adjacent sealing member. Therefore, since an amount of gas leakage through the sealing device can be largely reduced, refrigerating performance can be improved when the device is assembled in, e.g., a cryogenic refrigerator.

### Brief Description of Drawings

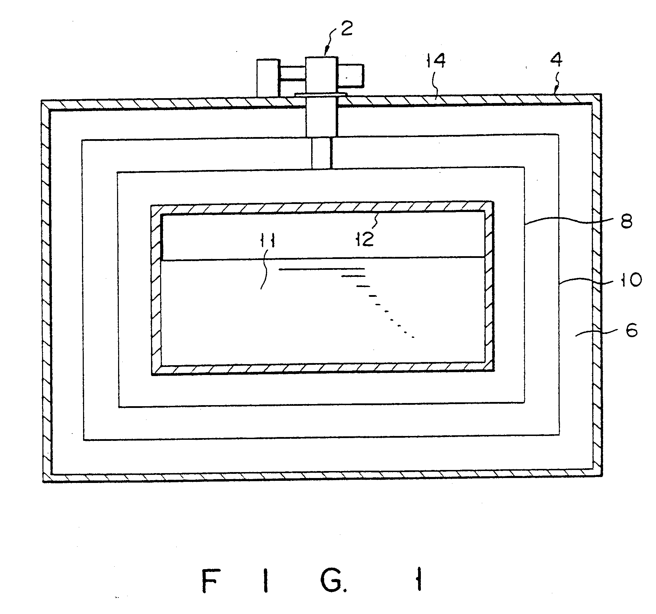

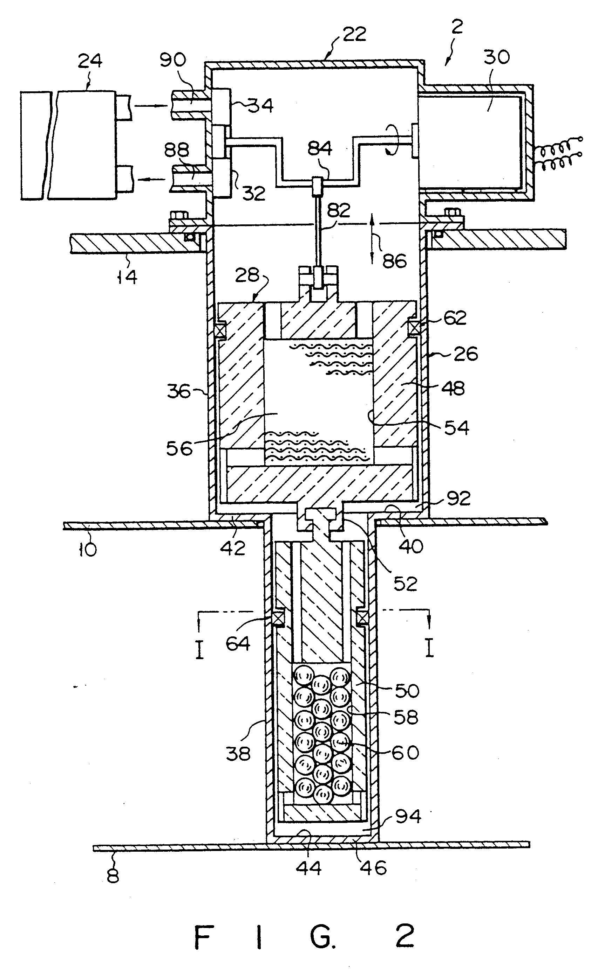

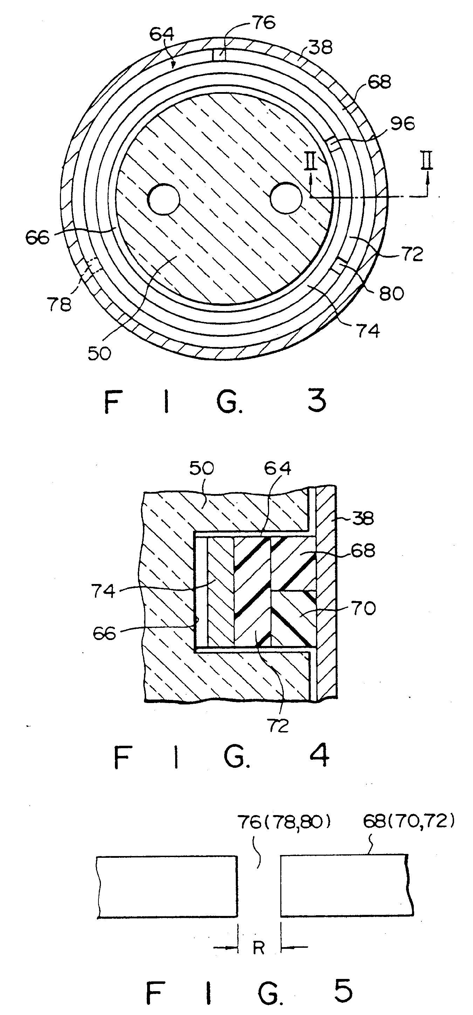

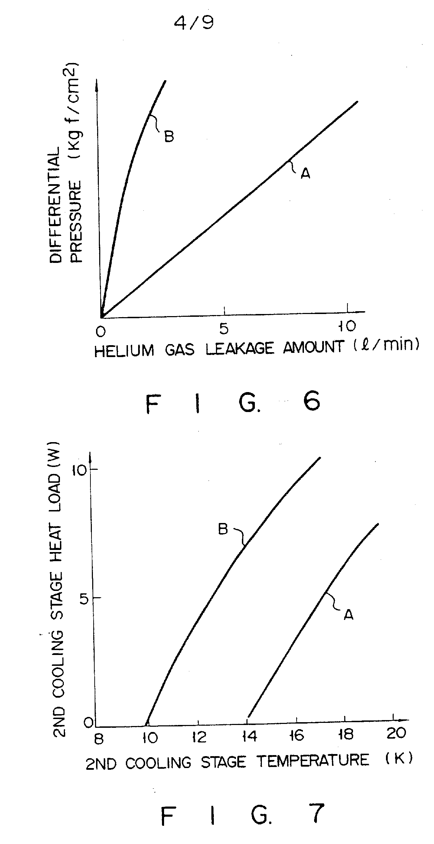

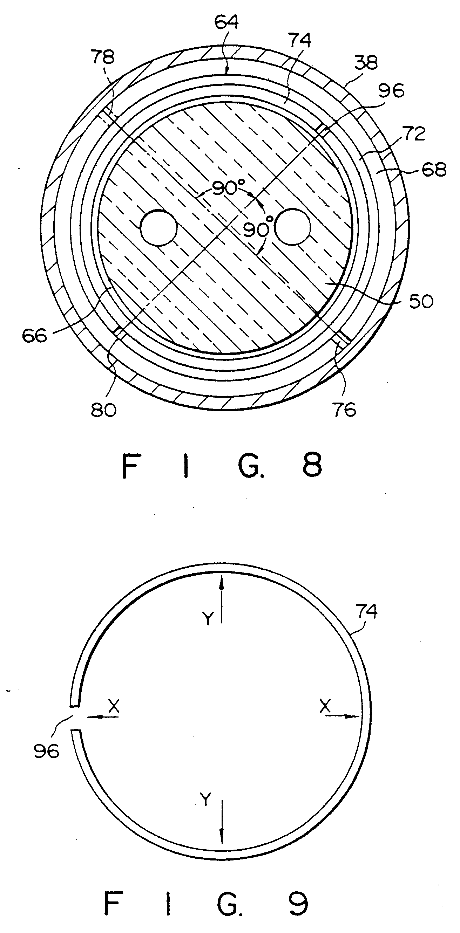

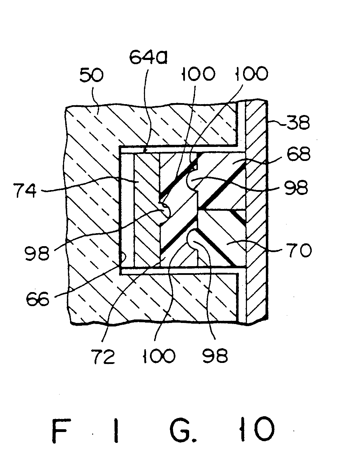

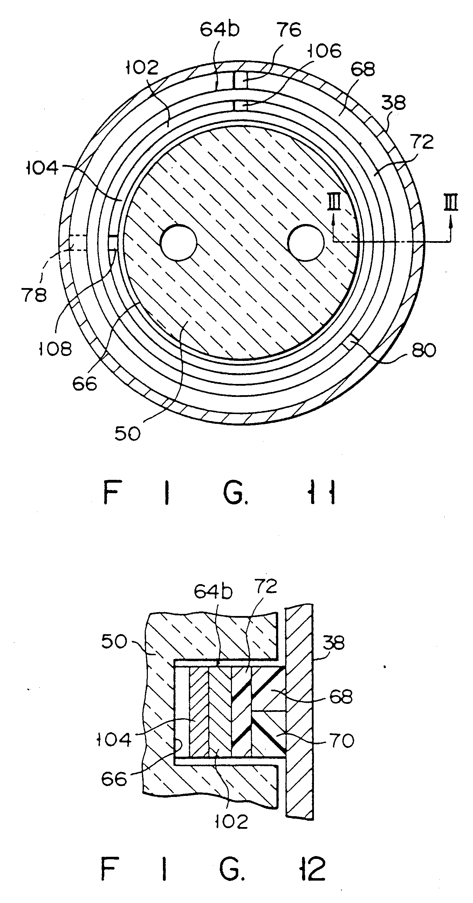

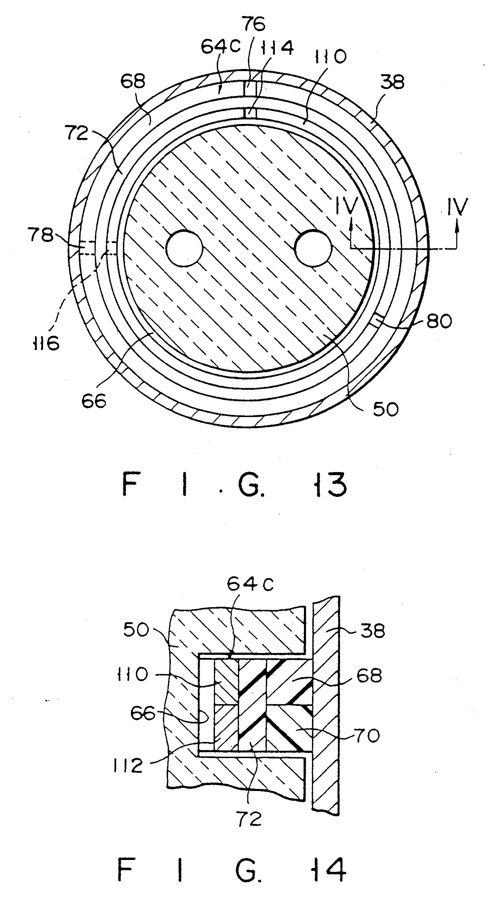

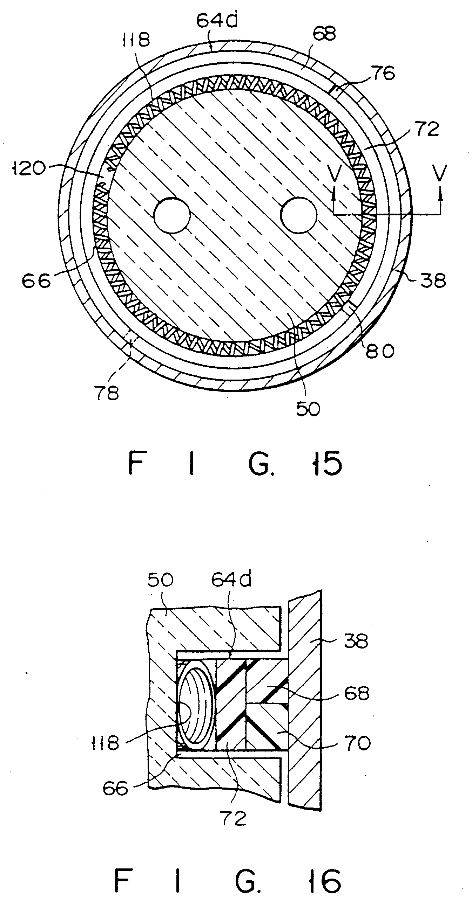

Fig. 1 is a schematic view showing an arrangement in which a Gifford-McMahon type refrigerator containing a sealing device according to an embodiment of the present invention is used to cool a radiant heat shielding plate arranged in an insulating layer of a cryostat; Fig. 2 is a partially cutaway side view showing the Gifford-McMahon type refrigerator shown in Fig. 1; Fig. 3 is a sectional view showing the sealing device contained in the refrigerator taken along a line I - I in Fig. 2 and viewed in a direction indicated by an arrow therein; Fig. 4 is a sectional view showing the sealing device taken along a line II - II in Fig. 3 and viewed in a direction indicated by an arrow therein; Fig. 5 is a view showing the shapes of two ends of a sealing member contained in the sealing device; Fig. 6 is a graph showing sealing characteristics of the sealing device of the present invention compared with those of a conventional sealing device; Fig. 7 is a graph showing characteristics of a refrigerator containing the sealing device of the present invention compared with those of a refrigerator containing a conventional sealing device; Fig. 8 is a sectional view corresponding to Fig. 3 and shows an arrangement of a modification of the sealing device; Fig. 9 is a view for explaining that a pressing force of an expander ring with ends differs at positions in the circumferential direction; Fig. 10 is a sectional view corresponding to Fig. 4 and shows an arrangement of a sealing device according to another embodiment of the present invention; Fig. 11 is a sectional view corresponding to Fig. 3 and shows an arrangement of a sealing device according to still another embodiment of the present invention; Fig. 12 is a sectional view showing the sealing device taken along a line III - III in Fig. 11 and viewed in a direction indicated by an arrow therein; Fig. 13 is a sectional view corresponding to Fig. 3 and shows an arrangement of a sealing device according to still another embodiment of the present invention; Fig. 14 is a sectional view showing the sealing device taken along a line IV - IV in Fig. 13 and viewed in a direction indicated by an arrow therein; Fig. 15 is a sectional view showing an arrangement of a sealing device according to still another embodiment of the present invention; and Fig. 16 is a sectional view showing the sealing device taken along a line V - V in Fig. 15 and viewed in a direction indicated by an arrow therein.

### Best Mode of Carrying Out the Invention

Embodiments of the present invention will be described below with reference to the accompanying drawings.

Fig. 1 shows an arrangement in which a Gifford-McMahon refrigerator 2 containing a non-lubricating type sealing device according to an embodiment of the present invention is used to cool radiant heat shielding plates 8 and 10 arranged in a superinsulating layer 6 of a cryostat 4.

The cryostat 4 consists of a metal or a fiber reinforced plastic and comprises an inner tank 12 containing 4.2-K liquid helium 11, an outer tank 14 surrounding the inner tank 12, and the superinsulating layer 6 formed between the inner and outer tanks 12 and 14.

The superinsulating layer 6 mainly consists of a vacuum insulating layer. In the superinsulating layer 6, a double structure of the radiant heat shielding plates 8 and 10 consisting of, e.g., aluminum is arranged to surround the inner tank 12. In order to impart good insulating characteristics to the superinsulating layer 6, the inner radiant heat shielding plate 8 must be kept at about 15 K and the outer radiant heat shielding plate 10 must be kept at about 40 K. In the arrangement shown in Fig. 1, the Gifford-McMahon type refrigerator 2 cools the radiant heat shielding plates 8 and 10 to be about 15 K and 40 K, respectively.

The Gifford-McMahon type refrigerator 2 has an arrangement as shown in Fig. 2. That is, the refrigerator 2 is constituted by two main parts, a cold head 22 and a refrigerant gas compressor 24.

The cold head 22 comprises a closed cylinder 26, a piston, i.e., a displacer 28 housed to reciprocate in the cylinder 26, a motor 30 for giving required power to the displacer 28, and low- and high-pressure valves 32 and 34 to be opened/closed in association with reciprocation of the displacer 28.

The cylinder 26 is constituted by a first cylinder 36 having a large diameter and a second cylinder 38 coaxially connected to the first cylinder 36 and having a small diameter. The first and second cylinders 36 and 38 are normally formed of a thin stainless steel plate or the like. In the refrigerator 2, a first cooling stage 42 is constituted by a boundary wall 40 between the first and second cylinders 36 and 38, and a second cooling stage 46 at a lower temperature than that the first cooling stage 42 is constituted by a distal end wall 44 of the second cylinder 38.

The displacer 28 is constituted by a first displacer 48 which reciprocates in the first cylinder 36 and a second displacer 50 which reciprocates in the second cylinder 38. The first and second displacers 48 and 50 consist of an insulating material such as Bakelite. The first and second displacers 48 and 50 are axially coupled to each other by a coupling mechanism 52.

A fluid path 54 extending in the axial direction is formed inside the first displacer 48. The fluid path 54 contains a heat regeneration layer 56 formed of, e.g., a copper mesh. Similarly, an axial fluid path 58 is formed inside the second displayer 50. The fluid path 58 contains a heat regeneration layer 60 formed of lead spheres or the like.

Sealing devices 62 and 64 are fitted between the outer circumferential surface of the first displacer 48 and the inner circumferential surface of the first cylinder 36 and between the outer circumferential surface of the second displacer 50 and the inner circumferential surface of the second cylinder 38, respectively.

Each of the sealing devices 62 and 64, e.g., the sealing device 64 has an arrangement as shown in Figs. 3 to 5. That is, the sealing device 64 comprises a ring groove 66 formed in the outer circumferential surface of the second displacer 50, ring-like outer sealing members 68 and 70 fitted in the ring groove 66 such that the two members 68 and 70 are axially stacked and their outer circumferential surfaces are brought into contact with the inner circumferential surface of the second cylinder 38, an inner sealing member 72 fitted inside the outer sealing members 68 and 70, and an expander ring 74 with ends, fitted inside the inner sealing member 72, for pressing the outer sealing members 68 and 70 against the inner circumferential surface of the second cylinder 38 via the inner sealing member 72.

Each of the outer sealing members 68 and 70 and the inner sealing member 72 is formed of a resin-based material such as a composite material consisting of ethylene tetrafluoride and a wear-resistant material or a composite material consisting of a glass fiber and polyamide to have a rectangular sectional shape. The outer sealing members 68 and 70 have an equal axial thickness and an equal radial thickness. The inner sealing member 72 has an axial thickness equal to the total axial thickness of the outer sealing members 68 and 70. The expander ring 74 is formed of stainless steel to have a rectangular sectional shape and an axial thickness equal to that of the inner sealing member 72. The ring groove 66 is formed to have an axial width with a precision of +50 »m with respect to the total axial thickness of the outer sealing members 68 and 70. As shown in Fig. 5, the outer sealing members 68 and 70 and the inner sealing member 72 formed as described above are fitted in the ring groove 66 such that a cut 76 (78, 80) having a short distance R is formed between the two ends of the member and the cuts 76, 78, and 80 are separated by about 120° in the circumferential direction as shown in Fig. 3.

As shown in Fig. 2, the upper end of the first displacer 48 is coupled to a rotating shaft of the motor 30 via a coupling rod 82 and a crankshaft 84. When the rotating shaft of the motor 30 rotates, therefore, the displacer 28 reciprocates in a direction indicated by a solid line 86 in Fig. 2 in synchronism with the rotation.

One opening portion of each of the low- and high-pressure valves 32 and 34 communicates with an upper space in the first cylinder 36. The other opening portion of the low-pressure valve 32 communicates with a refrigerant gas exhaust port 88 formed in the side wall of the first cylinder 36. The other opening portion of the high-pressure valve 34 communicates with a refrigerant gas supply port 90 formed in the side wall of the first cylinder 36. The refrigerant gas exhaust port 88 is connected to the refrigerant gas supply port 90 via the compressor 24. The compressor 24 constitutes a helium gas circulating system including the cylinder 26. That is, the compressor 24 draws helium gas at a low pressure (about 5 atm) from the cylinder 26, compresses the gas up to a high pressure (about 18 atm), and supplies the compressed gas to the cylinder 26. Note that the low- and high-pressure valves 32 and 34 are controlled to be opened/closed (as will be described later) in association with reciprocation of the displacer 28.

The refrigerator 2 having the above arrangement is provided such that a vacuum of the superinsulating layer 6 is not disturbed and the second and first cooling stages 46 and 42 are brought into tight contact with the radiant heat shielding plates 8 and 10, respectively.

An operation of the above refrigerator 2 will be briefly described below. In the refrigerator 2, portions to serve as cooling surfaces are the first and second cooling stages 42 and 46. The first and second cooling stages 42 and 46 are cooled to about 30 K and 8 K, respectively, when no heat load is applied thereon. Therefore, a temperature gradient from room temperature (300 K) to 30 K is obtained between the upper and lower ends (Fig. 2) of the first displacer 48. Also, a temperature gradient from 30 K to 8 K is obtained between the upper and lower ends (Fig. 2) of the second displacer 50. Note that the temperature changes in accordance with a heat load on each cooling stage and is normally between 30 K to 80 K on the first cooling stage 42 and between 8 K to 20 K on the second cooling stage 46.

When the motor 30 starts rotation, the displacer 28 reciprocates between its top and bottom dead centers. When the displacer 28 is at the bottom dead center, the high-pressure valve 34 opens to flow high-pressure helium gas into the cylinder 26.

The displacer 28 then moves to the top dead center. As described above, the sealing devices 62 and 64 are fitted between the outer circumferential surface of the first displacer 48 and the inner circumferential surface of the first cylinder 36 and between the outer circumferential surface of the second displacer 50 and the inner circumferential surface of the second cylinder 38, respectively. Therefore, when the displacer 28 moves to the top dead center, the high-pressure helium gas flows through the fluid path 54 formed in the first displacer 48 to a first expansion chamber 92 formed between the first and second displacers 48 and 50. A portion of the high-pressure helium gas flowing into the first expansion chamber 92 flows through the fluid path 58 formed in the second displacer 50 to a second expansion chamber 94 formed between the second displacer 50 and the distal end wall 44 of the second cylinder 38. In this manner, the high-pressure helium gas is cooled by the heat regeneration layer 56 and 60. As a result, the high-pressure helium gas flowing into the first expansion chamber 92 is cooled to about 30 K, and that flowing into the second expansion chamber 94 is cooled to about 8 K.

At this timing, the high-pressure valve 34 is closed, and the low-pressure valve 32 is opened. When the low-pressure valve 32 is opened, the high-pressure helium gas in the first and second expansion chambers 92 and 94 adiabatically expands. The temperature of helium gas in the first and second expansion chambers 92 and 94 is further decreased upon adiabatic expansion. Since the temperature of gas is decreased, the first and second cooling stages 42 and 46 are cooled to lower temperatures.

When the displacer 28 moves to the bottom dead center again, the helium gas in the first and second expansion chambers 92 and 94 is exhausted accordingly. The expanded helium gas cools the heat regeneration layer 60 and 56 while passing through the fluid paths 58 and 54, respectively, and is exhausted at room temperature. The above cycle is repeated to perform a refrigerating operation. Therefore, the radiant heat shielding plate 8 is constantly kept at about 15 K, and the radiant heat shielding plate 10 is constantly kept at about 40 K.

Refrigerating performance of the refrigerator 2 having the above arrangement largely depends on the sealing performance of the sealing devices 62 and 64.

For example, if the sealing performance of the sealing device 64 is poor, the following phenomenon occurs. That is, when the high-pressure helium gas flows into the second expansion chamber 94, a portion of helium gas at a comparatively high temperature which is apt to flow from the first expansion chamber 92 to the fluid path 58 does not flow through the fluid path 58, i.e., is not brought into contact with the heat regeneration layer 60 but flows directly into the second expansion chamber 94 through a gap between the second displacer 50 and the second cylinder 38. When helium gas at a low temperature is exhausted from the second expansion chamber 94, a portion of the gas flows directly into the first expansion chamber 92 through a gap between the second displacer 50 and the second cylinder 38 without being brought into contact with the heat regeneration layer 60. As a result, although the temperature of the first cooling stage 42 is decreased, that of the second cooling stage 46 is increased. Therefore, good refrigerating characteristics cannot be obtained.

As in this embodiment, however, when the sealing devices 62 and 64 each having the outer sealing members 68 and 70, the inner sealing member 64, and the expander ring 74 assembled as shown in Fig. 4 are used, an amount of gas leakage at the sealing devices 62 and 64 can be reduced. As a result, the refrigerating performance can be improved.

That is, each of the sealing devices 62 and 64 uses the three sealing members 68, 70, and 72. Therefore, a total of three cuts 76, 78, and 80 are present. Since, however, the sealing members 68, 70, and 72 are fitted such that the positions of the cuts 76, 78, and 80 are circumferentially shifted, the cuts 76, 78, and 80 can be radially and axially closed by the sealing members 68, 70, and 72. Therefore, a structure equivalent to a structure in which an endless seal ring having substantially no cut and capable of being pressed against the inner circumferential surface of the cylinder can be formed. By selecting the axial width of the ring groove 66 or the like, circumferential movement of the outer sealing members 68 and 70 and the inner sealing member 72 during operation can be easily prevented. As a result, a gas leakage amount at the sealing devices 62 and 64 can be largely reduced. It should be noted that the circumferential distance R of each of the cuts 76, 78, and 80 has no influence on the sealing performance of the sealing devices 62 and 64. Therefore, even if the sealing members 68, 70, and 72 circumferentially shrink due to the temperature during operation to expand the distance R, the sealing performance does not change. Therefore, in the refrigerator 2 containing the above sealing devices 62 and 64, an increase in temperature in especially the second cooling stage 46 can be suppressed to improve the refrigerating power.

Fig. 6 shows measurement results of gas leakage amounts in a conventional sealing device and the sealing device shown in Fig. 4. Referring to Fig. 6, a curve A indicates the gas leakage amount in the conventional sealing device, and a curve B indicates that of the sealing device shown in Fig. 4. These curves indicate the measurement results obtained in a still state at room temperature by setting the.axial width of the ring groove and the pressing force of the expander ring to be equal in the two devices. Although these measurement conditions are different from actual operation conditions (low temperature, reciprocation), the leakage amount is largely reduced in the sealing device of the present invention. This tendency is expected to be obtained under the actual operation conditions. Referring to Fig. 7, a curve A indicates refrigeration characteristics of a refrigerator containing a conventional sealing device, and a curve B indicates that of a refrigerator containing the sealing device shown in Fig. 4. In Fig. 7, the abscissa indicates the temperature (K) of the second cooling stage 46, and the ordinate indicates the heat load (W) applied on the second cooling stage 46. As is apparent from Fig. 7, the refrigerator containing the sealing device shown in Fig. 4 has higher refrigerating power. Therefore, the refrigerating power can be increased by using the sealing devices 62 and 64 having the above arrangement.

In the above description, a relationship between the expander ring 74 and the outer sealing members 68 and 70 is not particularly explained. As shown in Fig. 8 corresponding to Fig. 3, however, a significant effect can be obtained by circumferentially shifting the positions of the cuts 76 and 78 of the outer sealing members 68 and 70 by substantially ±90° from that of a cut 96 of the expander ring 74. In this case, the inner sealing member 72 is fitted such that its cut 80 does not overlap the cuts 76 and 78 of the outer sealing members 68 and 70.

When the refrigerator 2 starts its operation, especially the sealing device 64 is exposed to a low temperature. Therefore, the outer sealing members 68 and 70 and the inner sealing member 72 contained in the sealing device 64 thermally shrink. Upon this heat shrinkage, especially the two end portions of each of the outer sealing members 68 and 70 are apt to separate (float) from the inner surface of the second cylinder 38. If such floating occurs, a gas leakage amount may be increased. Therefore, the outer sealing members 68 and 70, especially, their end portions are preferably pressed against the inner surface of the second cylinder 38 by a strong force. Fig. 9 shows a radial outward pressing force of the expander ring 74 with ends. As shown in Fig. 9, a pressing force X on a line connecting the center and the cut 96 is smallest, and a pressing force Y on a line perpendicular to the above line is largest. Therefore, when the sealing members 68 and 70 and the expander ring 74 are fitted such that the positions of the cuts 76 and 78 of the outer sealing members 68 and 70 are circumferentially shifted by substantially +90° from that of the cut 96 of the expander ring 74 as shown in Fig. 8, a largest pressing force can be applied to the end portions of the outer sealing members 68 and 70. As a result, since floating of the end portions of the outer sealing members 68 and 70 can be prevented, the gas leakage amount can be further reduced.

The above function is achieved provided that the positions of the outer sealing members 68 and 70, the inner sealing member 72, and the expander ring 74 are not circumferentially deviated during operation. This circumferential positional deviation of the member can be prevented by setting a precision of the axial width of the ring groove 66 to fall within ±50 »m with respect to the total axial width of the outer sealing members 68 and 70 in processing of the ring groove 66. As shown in Fig. 10, however, a projection 98 and a recess 100 may be formed on a contact surface of each member so that the adjacent members are engaged with each other at only one portion in the circumferential direction. As a result, the above circumferential positional deviation can be effectively prevented by an engagement between the projection 98 and the recess 100.

Figs. 11 and 12 show a sealing device 64b according to another embodiment of the present invention. Fig. 11 corresponds to Fig. 3, and Fig. 12 corresponds to Fig. 4. In Figs. 11 and 12, the same reference numerals as in Figs. 3 and 4 denote the same parts. Therefore, a detailed description of these parts will be omitted.

The sealing device 64b according to this embodiment includes two expander rings 102 and 104 with ends radially overlapped and fitted inside an inner sealing member 72. In this embodiment, the position of a cut 108 of the expander ring 104 is circumferentially shifted by substantially 90° from that of a cut 106 of the expander ring 102.

With this arrangement, outer sealing members 68 and 70 can be substantially uniformly pressed against the inner surface of a second cylinder 38 throughout their overall circumferential surfaces. That is, as described above with reference to Fig. 9, of pressing force components of an expander ring with ends, the pressing force X on a line connecting the center and a cut is smallest, and the pressing force Y on a line perpendicular to the above line is largest. Therefore, as in this embodiment, when the position of the cut 108 of the expander ring 104 is circumferentially shifted by substantially 90° from that of the cut 106 of the expander ring 102, a portion having the largest pressing force of the expander ring 104 can be located at a portion having the smallest pressing force of the expander ring 102, and a portion having the largest pressing force of the expander ring 102 can be located at a portion having the smallest pressing force of the expander ring 104. As a result, the outer sealing members 68 and 70 can be substantially uniformly pressed against the inner surface of the second cylinder 38 throughout their overall circumferential surfaces.

Figs. 13 and 14 show a sealing device 64c according to still another embodiment of the present invention. Fig. 13 corresponds to Fig. 11, and Fig. 14 corresponds to Fig. 12. In Figs. 13 and 14, the same reference numerals as in Figs. 11 and 12 denote the same parts. Therefore, a detailed description of these parts will be omitted.

In the sealing device 64c according to this embodiment, two axially overlapped expander rings 110 and 112 with ends are fitted inside an inner sealing member 72. In this embodiment, the position of a cut 116 of the expander ring 112 is circumferentially shifted by substantially 90° from that of a cut 114 of the expander ring 110.

With this arrangement, the same effect as that of the above embodiments can be obtained. This arrangement can be modified such that N (= 3 or more) expander rings with ends are radially or axially stacked and fitted inside the inner sealing member 72 and cuts of these expander rings are circumferentially shifted by 360°/N from each other.

Figs. 15 and 16 show a sealing device according to still another embodiment of the present invention. Fig. 15 corresponds to Fig. 13, and Fig. 16 corresponds to Fig. 14. In Figs. 15 and 16, the same reference numerals as in Figs. 13 and 14 denote the same parts. Therefore, a detailed description of these parts will be omitted.

In this sealing device 64d, a coil spring 118 with ends is used as an expander ring. Unlike a compression spring or a tension spring, this coil spring 118 receives a load at its side surfaces. That is, as shown in Fig. 16, the coil spring 118 gives its recovering force obtained between the side surfaces as a pressing force.

With this arrangement, a radial recovering force can be obtained from any position in the circumferential direction of the coil spring 118. Therefore, floating of end portions of outer sealing members 68 and 70 can be prevented without strictly specifying a circumferential positional relationship between the coil spring 118 and the outer sealing members 68 and 70. For example, even when a cut 120 of the coil spring 118 is circumferentially separated from cuts 76 and 78 of the outer sealing members 68 and 70 by an interval of 120° or 50°, the entire outer sealing members 68 and 70 can be uniformly pressed against the inner surface of a second cylinder 38 by a strong force. Therefore, not only a gas leakage amount can be reduced but also assembly of the device can be simplified.

In each of the above embodiments, the sealing device according to the present invention is contained in a cryogenic refrigerator. However, this sealing device can be contained in any similar system requiring non-lubrication.

### Industrial Applicability

As has been described above, in the sealing device according to the present invention, three sealing members and an expander ring are used in combination. Therefore, even if the sealing members thermally shrink at a cryogenic temperature, the sealing device can exhibit a good sealing function without being adversely affected by heat shrinkage. Therefore, this sealing device can be used in an atmosphere with a wide temperature range from room temperature to a cryogenic temperature.

## Claims

1. A sealing device for sealing a gap between a cylinder (38) and a piston (50) without using a lubricating oil, comprising a ring groove (66) formed in an outer circumferential surface of said piston (50), first and second ring-like sealing members (68, 70) consisting of a resin-based material and axially stacked in said ring groove (66), a third ring-like sealing member (72) fitted inside said first and second sealing members (68, 70), and an expander ring (118) with ends, fitted inside said third sealing member (72), for pressing said first and second sealing members (68, 70) against an inner circumferential surface of said cylinder (38) via said third sealing member (72);
characterized in that:
said expander ring (118) is constituted by a coil spring with ends, and is fitted between an inner circumferential surface of said third sealing member (72) and a bottom of said ring groove (66) such that radial recovering forces of said expander ring (118) are applied toward the inner circumferential surface of said cylinder (38).

2. A device according to claim 1, wherein said first, second, and third sealing members (68, 70, 72) are fitted in said ring groove (66) such that a position of a cut present between two end portions of each member is circumferentially shifted from those of the other members.

3. A device according to claim 1, wherein said third sealing member (72) has an axial thickness equal to a total axial thickness of said first and second sealing members (68, 70).

4. A device according to claim 1, wherein an axial width of said ring groove (66) is formed to have a precision of ± 50 »m with respect to a total axial thickness of said first and second sealing members (68, 70).

5. A device according to claim 1, wherein each of said first, second, and third sealing members (68, 70, 72) has a projection (98) and a recess (100) for engaging with adjacent sealing members in contact with each other at only one portion in a circumferential direction.

## Patentansprüche

1. Dichtungsanordnung zum Abdichten eines Spalts zwischen einem Zylinder (38) und einem Kolben (50) ohne Verwendung eines Schmieröls, umfassend eine in einer Außenumfangsfläche des Kolbens (50) geformte Ringnut (66), erste und zweite ringförmige Dicht(ungs)elemente (68, 70) aus einem Material auf Harzbasis, die in der Ringnut (66) axial gestapelt bzw. aufeinandergesetzt sind, ein innenseitig der ersten und zweiten Dichtelemente (68, 70) eingesetztes, drittes ringförmiges Dicht(ungs)element (72) und einen innenseitig des dritten Dichtelements (72) eingesetzten Spreizring (118) mit Enden (bzw. End-Stoß) zum Anpressen der ersten und zweiten Dichtelemente (68, 70) an eine Innenumfangsfläche des Zylinders (38) über das dritte Dichtelement (72),
dadurch gekennzeichnet, daß
der Spreizring (118) durch eine Schraubenfeder mit (Teilungs-)Enden gebildet und zwischen einer Innenumfangsfläche des dritten Dichtelements (72) und einer Sohle der Ringnut (66) so eingesetzt ist, daß radiale Rückstellkräfte des Spreizrings (118) zur Innenumfangsfläche des Zylinders (38) hin ausgeübt bzw. zur Einwirkung gebracht werden.

2. Anordnung nach Anspruch 1, wobei die ersten, zweiten und dritten Dichtelemente (68, 70, 72) so in die Ringnut (66) eingesetzt sind, daß eine Position eines zwischen zwei Endabschnitten eines jeden Elements vorhandenen (End-)Stoßes (cut) gegenüber denen der anderen Elemente umfangsmäßig versetzt ist.

3. Anordnung nach Anspruch 1, wobei das dritte Dichtelement (72) eine axiale Dicke gleich einer axialen Gesamtdicke der ersten und zweiten Dichtelemente (68, 70) aufweist.

4. Anordnung nach Anspruch 1, wobei die Ringnut (66) mit einer axialen Breite mit einer Präzision von ±50 »m in bezug auf eine axiale Gesamtdicke der ersten und zweiten Dichtelemente (68, 70) ausgebildet ist.

5. Anordnung nach Anspruch 1, wobei jedes der ersten, zweiten und dritten Dichtelemente (68, 70, 72) je einen Vorsprung (98) und eine Ausnehmung (100) für Eingriff mit benachbarten, miteinander in Berührung stehenden Dichtelementen an nur einem Abschnitt in einer Umfangsrichtung aufweist.

## Revendications

1. Dispositif d'étanchéité destiné à assurer l'étanchéité dans un espace compris entre un cylindre (38) et un piston (50) en l'absence d'une huile lubrifiante, comprenant une gorge annulaire (66) formée à une surface circonférentielle externe du piston (50), un premier et un second organe annulaire (68, 70) d'étanchéité constitués d'un matériau à base d'une résine et empilés axialement dans la gorge annulaire (66), un troisième organe annulaire (72) d'étanchéité logé à l'intérieur du premier et du second organe (68, 70) d'étanchéité, et un anneau de dilatation (118) ayant des extrémités, logé à l'intérieur du troisième organe (72) d'étanchéité, et destiné à repousser le premier et le second organe (68, 70) d'étanchéité contre une surface circonférentielle interne du cylindre (38) par l'intermédiaire du troisième organe (72) d'étanchéité,
caractérisé en ce que :
l'anneau de dilatation (118) est constitué d'un ressort hélicoïdal ayant des extrémités et est logé entre une surface circonférentielle interne du troisième organe (72) d'étanchéité et le fond de la gorge annulaire (66) afin que les forces de rétablissement radial de l'anneau de dilatation (118) soient appliquées vers la surface circonférentielle interne du cylindre (38).

2. Dispositif selon la revendication 1, dans lequel le premier, le second et le troisième organe (68, 70, 72) d'étanchéité sont logés dans la gorge annulaire (66) de manière que la position d'une découpe présente entre les deux parties d'extrémité de chaque organe soit décalée circonférentiellement par rapport aux découpes des autres organes.

3. Dispositif selon la revendication 1, dans lequel le troisième organe (72) d'étanchéité a une épaisseur axiale égale à la somme des épaisseurs axiales du premier et du second organe (68, 70) d'étanchéité.

4. Dispositif selon la revendication 1, dans lequel la largeur axiale de la gorge annulaire (66) est telle qu'elle a une précision de ±50 »m par rapport à l'épaisseur axiale totale du premier et du second organe d'étanchéité (68, 70).

5. Dispositif selon la revendication 1, dans lequel chacun des premier, second et troisième organes (68, 70, 72) d'étanchéité possède une saillie (98) et une cavité (100) destinées à coopérer avec des organes adjacents d'étanchéité en contact mutuel dans une partie seulement en direction circonférentielle.
